# EUROPÄISCHE PATENTSCHRIFT

(11) **EP 1 145 816 B1**
(45) Veröffentlichungstag und Bekanntmachung des Hinweises auf die Patenterteilung: **23.06.2004**
(21) Anmeldenummer: 00107721.3
(22) Anmeldetag: 11.04.2000
(51) Int. Cl.: B29C 44/12, B29C 33/26, B29C 65/58

(54) **Maschinelles Verklipsen von Sandwichelementen**
Machine interlocking of sandwich elements
Encliquetage automatique des éléments du type sandwich

(43) Veröffentlichungstag der Anmeldung: 17.10.2001
(73) Patentinhaber: Siempelkamp Handling Systeme GmbH & Co., 82515 Wolfratshausen (DE)
(72) Erfinder:
(74) Vertreter: Szynka, Dirk

(56) Entgegenhaltungen:
- EP-A- 0 030 385
- EP-A- 0 974 726
- US-A- 3 512 305
- US-A- 4 966 424

## Beschreibung

Diese Erfindung bezieht sich auch auf Sandwichelemente, die zwei Deckschichten mit einem dazwischenliegenden Füllmaterial und einen die Deckschichten in einem Außenrandbereich verbindenden Rahmen aufweisen.

Es ist bekannt, solche Sandwichelemente herzustellen, indem die Deckschichten oder zumindest eine der Deckschichten mit dem Rahmen "verklipst" werden. Dazu sind an zumindest zwei entgegengesetzten Außenkanten des Sandwichelements Rasteinrichtungen vorgesehen, die in Eingriff gebracht werden können und dann die betreffende Deckschicht an dem Rahmen festhalten.

Der Arbeitsschritt des Verklipsens einer Deckschicht mit dem Rahmen erfordert eine erhöhte Sorgfalt und kann bei unvorsichtiger oder ungenauer Vorgehensweise leicht zu Brüchen und Beschädigungen an dem Rahmen oder den Deckschichten, insbesondere im Bereich der Rasteinrichtungen, führen.

Die EP 0 974 726 A2 zeigt ein Verfahren zum Herstellen eines Sandwichelements nach dem Oberbegriff des Anspruchs 1.

Die US 3 512 305 zeigt ein anderes Verfahren zum Herstellen eines Sandwichelements, bei dem eine obere Deckschicht an einer Seite an den Rahmen angelegt wird, ohne daß dort eine Verrastung vorgesehen wäre, und die dabei vorliegende Schräglage der Deckschicht relativ zu dem Rahmen in eine Anlage überführt wird, wobei auf der entgegengesetzten Seite der Deckschicht eine Rasteinrichtung eingeklipst wird.

Der Erfindung liegt das technische Problem zugrunde, ein im Hinblick auf eine Verbindung zumindest einer Deckschicht mit dem Rahmen durch Rasteinrichtungen verbessertes Herstellungsverfahren für Sandwichelemente zu finden.

Erfindungsgemäß wird dieses Problem dadurch gelöst, daß die Rasteinrichtungen durch eine automatische Einklipsvorrichtung maschinell in Eingriff gebracht werden und die automatische Einklipsvorrichtung unter relativer Schräglage der Deckschicht und des Rahmens zunächst die Rasteinrichtung auf einer der beiden Seiten in Eingriff bringt und danach unter Aufrechterhaltung dieses Eingriffs die Schräglage in eine Anlage überführt, wobei bei Herstellung der Anlage die Rasteinrichtung auf der anderen der beiden Seiten in Eingriff gebracht wird.

Daneben bezieht sich die Erfindung auch auf eine entsprechend ausgestaltete Einklipsvorrichtung. Deswegen ist die folgende Beschreibung, einschließlich der Ausführungsbeispiele sowohl als explizite und implizite Offenbarung von Verfahrensmerkmalen als auch von Vorrichtungsmerkmalen zu verstehen.

Der wie zuvor beschrieben relativ kritische Einklipsschritt wurde konventionellerweise durch Arbeiter per Hand durchgeführt. Dadurch kann im Einzelfall umsichtig und auf entstehende Schwierigkeiten individuell reagierend gearbeitet werden. Demgegenüber ist erfindungsgemäß vorgesehen, ein effizientes maschinelles Verklipsen mit Hilfe einer automatischen Einklipsvorrichtung dadurch zu ermöglichen, daß eine besondere Bewegungsfolge beim Einklipsen gewählt wird. Und zwar wird zuerst nur eine der Rasteinrichtungen auf einer der beiden Seiten des Sandwichelements in Eingriff gebracht, wobei die Deckschicht und der Rahmen relativ zueinander schräg orientiert sind, so daß sie sich zunächst im wesentlichen nur im Bereich der Seite der Rasteinrichtung berühren. Wenn an dieser Stelle der Eingriff hergestellt worden ist, wird die Schräglage so in eine flächige Anlage der Deckschicht gegen den Rahmen überführt, daß der Eingriff dabei erhalten bleibt. Am Ende dieser Überführungsbewegung, also bei der Herstellung der Anlage der Deckschicht gegen den Rahmen, wird die zweite Rasteinrichtung auf der verbleibenden Seite in Eingriff gebracht. Es hat sich herausgestellt, daß durch diese Aufteilung des Verklipsens auf zwei einzelne Schritte für jeweils nur eine Rasteinrichtung eine wesentlich schonendere Vorgehensweise möglich ist.

Außerdem können die Eingriffsfolgen in der Rasteinrichtung durch eventuelles Personal getrennt voneinander beobachtet werden und die Einklipsvorrichtung auf die einzelnen Eingriffsvorgänge separat optimal eingestellt werden. Als günstige Werte für die anfängliche Schräglage zwischen den zu verklipsenden Teilen haben sich Winkel zwischen 0,5° und 4°, vorzugsweise zwischen 0,8° und 2°, herausgestellt.

Vorzugsweise wird diese Einklipstechnik bei einer solchen Ausgestaltung des Herstellungsverfahrens verwendet, bei der zunächst aus einer der Deckschichten und dem Rahmen eine einseitig offene Kassette gebildet wird, diese Kassette danach mit dem Füllmaterial gefüllt wird und dann die verbleibende Deckschicht in der erfindungsgemäßen Weise mit dem Rahmen, d.h. also mit der Kassette, verklipst wird. Dem steht natürlich nicht entgegen, auch die andere Deckschicht bereits bei der Herstellung der Kassette mit dem Rahmen zu verklipsen. Bei der Herstellung der Kassetten ist jedoch vom Gesichtspunkt der Arbeitsökonomie her noch eher ein Handarbeitsvorgang tolerabel als nach Herstellung und Befüllen der Kassetten. In diesem Stadium sollte vorzugsweise vollautomatisch und maschinell gearbeitet werden, im günstigsten Fall in einer einheitlichen Produktionsstraße.

Weiterhin richtet sich die Erfindung bevorzugt auf ein Herstellungsverfahren, bei dem nach dem Zusammenbau des Sandwichelements, d.h. nach der Verbindung beider Deckschichten mit dem Rahmen, ein Verfahrensschritt in einer Doppelbandanlage vorgesehen ist. In der Doppelbandanlage kann eine chemische Reaktion oder ein Abbindevorgang in dem Sandwichelement kontrolliert und temperiert durchgeführt werden. Insbesondere betrifft das die Anwendung der Erfindung auf ausreagierende Schaummaterialien. Dabei kann die in das Sandwichelement eingebrachte Substanz zunächst auch eine Vorläuferflüssigkeit sein, die erst bei oder nach dem Eintrag aufschäumt.

Die Rasteinrichtungen selbst bestehen im allgemeinen aus einer Kombination von elastisch verformbaren Elementen mit Hinterschnitten oder Vorsprüngen. Besonders bevorzugt ist, daß die Rahmenaußenkanten an einer Seite, vorzugsweise längsseitig, Hinterschnitte aufweisen und die Deckschicht entsprechend ausgebildete, nach innen gebogene Vorsprünge, die beim Verklipsen mit dem Innenteil in die Hinterschnitte eingreifen.

Einen wichtigen Anwendungsfall bilden dabei Sandwichelemente, bei denen der Rahmen zumindest im wesentlichen aus Holz oder einem holzähnlichen Material besteht. Zum einen ist dies ein häufiger und technisch wichtiger Fall, beispielsweise bei der Herstellung von Türelementen. Zum anderen können gerade an Holzrahmen mit Hinterschnitten, Vorsprüngen oder anderen Rasteinrichtungsteilen leicht mechanische Schäden auftreten, wenn der Einklipsvorgang nicht optimal durchgeführt wird. Deswegen ist die erfindungsgemäße Vorgehensweise hier von großem Vorteil. Türelemente bilden im übrigen auch in anderen Fällen als bei Holzrahmen einen wichtigen Anwendungsbereich.

Eine günstige Möglichkeit zur Erleichterung des Einklipsvorgangs, vor allem bei empfindlichen Materialien wie Holz, besteht darin, daß ein elastischer Teil der zuerst in Eingriff gebrachten Rasteinrichtung, etwa ein elastischer Arm mit einem nach innen gewölbten Vorsprung an der Deckschicht, beim in Eingriff Bringen der anderen Rasteinrichtung, so ausgelenkt wird, daß das Einklipsen der zweiten Rasteinrichtung erleichtert wird. Bei diesem Vorgang werden plötzliche starke Beanspruchungen der zweiten Rasteinrichtung vermieden, weil ein Teil der notwendigen Verformung durch die erste Rasteinrichtung aufgefangen wird. Auch die erste Rasteinrichtung kann geschont werden, indem die zu verklipsenden Teile erst seitlich in Eingriff gebracht werden, bevor dann eine elastische Verformung zur Unterstützung des zweiten Einklipsvorgangs erfolgt. Vor allem durch ihre Formgebung gefährdete Holzteile, wie Vorsprünge oder Hinterschneidungen, profitieren von dieser Vorgehensweise.

Zur Vereinfachung der Konstruktion der automatischen Einklipsvorrichtung wird der Einklipsvorgang vorzugsweise so durchgeführt, daß eines der beiden miteinander zu verklipsenden Teile in einer Fördereinrichtung, einer Produktionsstraße oder dergleichen angehalten wird, während der Einklipsvorgang stattfindet. Dadurch muß die erfindungsgemäße Bewegungsfolge nicht auf die Fördergeschwindigkeit angepaßt vollzogen werden. Außerdem ist der Vorgang durch Personal besser zu beobachten, einzustellen und zu überwachen. Es kann gegebenenfalls auch leichter von Hand eingegriffen werden.

Wenn dabei eine von anderen Anlagenteilen vorgegebene Anlagenfördergeschwindigkeit zu beachten ist, so kann, wenn beispielsweise das angehaltene Teil die Kassette ist, der Vorgang des Füllmaterialeintrags in die Kassette bei einer gegenüber der Anlagenfördergeschwindigkeit erhöhten Geschwindigkeit stattfinden. Beispielsweise kann die Kassette unter einem Portal mit einer Schaumauftragsvorrichtung schnell durchgefahren werden. Dabei kann die Auslegung so sein, daß sich insgesamt durch eine Mittelung der erhöhten Fördergeschwindigkeit der Kassette beim Füllmaterialeintrag mit der durch den Einklipsvorgang notwendigen Pause die notwendige Anlagenfördergeschwindigkeit und damit eine Anpassung an andere Anlagenteile ergibt. In gleicher Weise kann ein Fördervorgang der mit der oberen Deckschicht bereits verklipsten Kassette von der automatischen Einklipsvorrichtung zu einer darauffolgenden Einrichtung, insbesondere der Doppelbandanlage, mit gegenüber der Anlagenfördergeschwindigkeit erhöhter Geschwindigkeit erfolgen, womit eine analoge Wirkung erzielt wird. Beide Varianten können auch kombiniert werden, wiederum mit einer Auslegung auf einen der vorgegebenen Anlagenfördergeschwindigkeit entsprechenden Mittelwert.

Eine Alternative zu der Transportunterbrechung beim Einklipsen ist vorzugsweise in folgender Weise möglich: Die Kassette wird im ununterbrochenen Transport auf der Fördereinrichtung gegen die relativ zu ihr schräggestellte obere Deckschicht gefahren, wobei sich schon beim Anschlag ein Eingriff der betreffenden Rasteinrichtung ergibt. Dieser Eingriff wird im folgenden beibehalten, während die weitertransportierte Kassette die obere Deckschicht mitnimmt und durch ein Durchziehen der Deckschicht unter einer Andruckvorrichtung, etwa einer Oberrolle, die Anlage der Deckschicht gegen die Kassette hergestellt und die verbleibende Rasteinrichtung eingeklipst wird. Dazu ist entweder ein Transport in Richtung der kürzeren Seite der Kassetten erforderlich, oder die Rasteinrichtungen sind an den kürzeren Seiten vorgesehen, was zu einer geringeren Stabilität der Sandwichelemente führt.

Zu weiteren Ausführungsformen wird auf die Ansprüche 14 bis 16 verwiesen.

Im folgenden wird ein Ausführungsbeispiel der Erfindung im einzelnen dargestellt. Die dabei offenbarten Einzelmerkmale können auch in anderen als den dargestellten Kombinationen erfindungswesentlich sein. Im einzelnen zeigt bzw. zeigen:
Fig. 1 eine Draufsicht auf einen Teil einer Produktionsanlage für Sandwichelemente nach dem erfindungsgemäßen Verfahren;
Fig. 2 eine Ausschnittsdarstellung eines wesentlichen Teils der Anlage aus Fig. 1;
Fig. 3 - 6 eine Folge von schematischen Aufrißdarstellungen, die zeitlich aufeinanderfolgende Funktionszustände einer automatischen Einklipsvorrichtung aus der in den Figuren 1 und 2 dargestellten Produktionsanlage verdeutlichen;
und Fig. 7 eine Ausschnittsdarstellung zu Fig. 5, wobei ein Querschnitt durch einen Rahmen eines erfindungsgemäßen Sandwichelements mit einer ausschnittsweisen Querschnittsdarstellung der oberen und der unteren Deckschicht zu sehen ist.

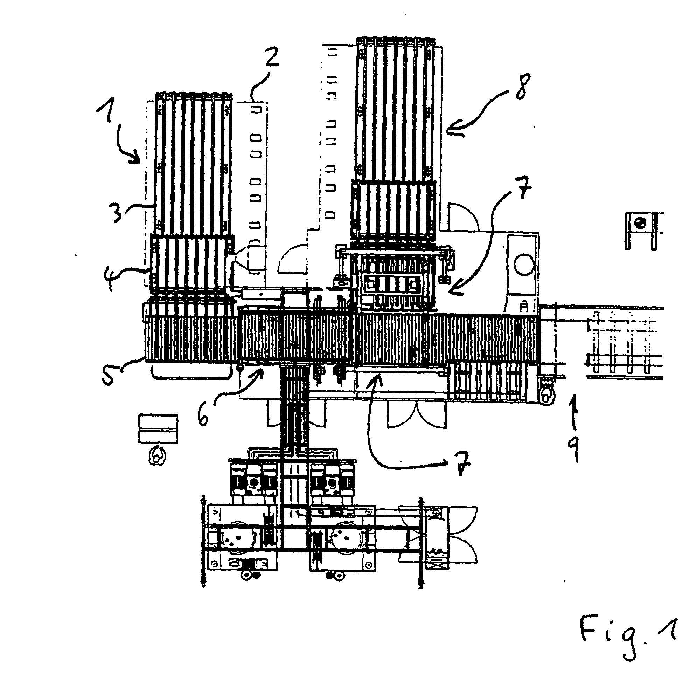

In Fig. 1 ist eine Draufsicht auf eine Produktionsanlage für Sandwichelemente dargestellt. Wie sich im folgenden noch deutlich ergibt, handelt es sich dabei um Türelemente in Sandwichbauweise, die aus zwei von einem Rahmen in einem Außenbereich verbundenen plattenartigen Deckschichten bestehen.

Dabei ist in das durch die Deckschichten und den Rahmen gebildete Volumen ein PUR/PIR-Schaum als Füllung eingebracht. Um die Erfindung verständlicher zu machen, wird zunächst ein grober Überblick über den gesamten Verfahrensablauf der Produktionsanlage in Fig. 1 gegeben.

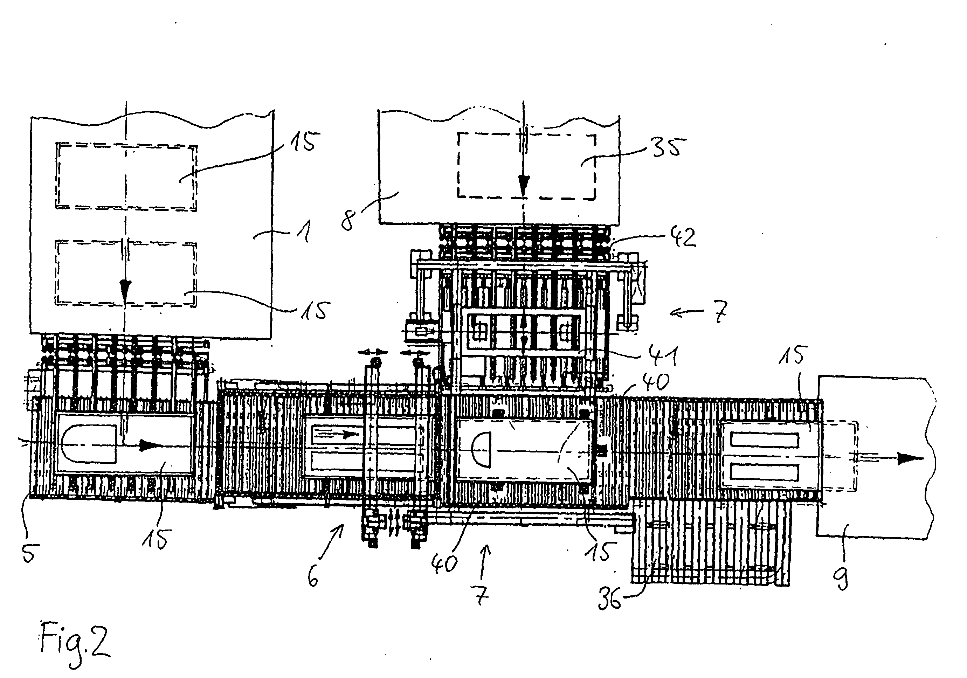

Zunächst bezeichnet 1 einen Durchlaufofen zum Vorwärmen von aus dem Rahmen und einer der Deckschichten gebildeten Kassetten (in Fig. 2 mit 15 bezeichnet). Weil die Kassetten vereinzelt transportiert und verarbeitet werden, kann die erfindungsgemäße Produktionsanlage auch eine "bunte Reihe" verschiedener Kassettentypen verarbeiten.

In dem in Fig. 1 dargestellten Außenumriß des Ofengehäuses 2 befindet sich ein erstes Segment 3 und ein zweites Segment 4 einer Riemenfördereinrichtung. In den Durchlaufofen 1 werden die vorgefertigten Kassetten eingeladen, die in nicht dargestellter Weise hergestellt worden sind. Beim Durchlaufen des Ofens 1 werden sie auf eine vorgegebene Prozeßtemperatur erwärmt, die am Ofenauslauf (in Fig. 1 am unteren Ende) vorliegen muß. Dort werden sie von dem zweiten Segment 4 der Fördereinrichtung ausgefahren und auf eine sogenannte Winkelstation übergeben, die der Anfang einer mit 5 bezeichneten Rollenfördereinrichtung ist. Im Bereich der Winkelstation greift zwischen die Rollen der Rollenfördereinrichtung 5 eine Riemenfördereinrichtung ein, so daß zunächst ein Transport der Kassetten in der vertikalen Richtung in Fig. 1 und dann in der horizontalen Richtung möglich ist. Zu den weiteren Einzelheiten des Betriebsverfahrens des Durchlaufofens wird verwiesen auf eine Parallelanmeldung der selben Anmelderin vom gleichen Anmeldetag mit dem Titel "Vorwärmtechnik mit Leistungsdrosselung bei Betriebsunterbrechungen". Wesentlich ist dabei, daß der Ofen in vier getrennt voneinander betreibbare Zonen eingeteilt ist, mit denen sich bei Betriebsunterbrechungen ein angenähertes Temperaturprofil einstellen läßt, das den tatsächlichen Temperaturen von Kassetten entspricht, die diese bei Durchlauf durch den Durchlaufofen bei Einzel- und Normalbetrieb annehmen. Hierdurch ist es möglich, eine Überhitzung von Kassetten bei Betriebsunterbrechungen zu verhindern.

Durch die Rollenfördereinrichtung gelangen die vorgewärmten Kassetten in eine hier nur grob dargestellte Beschäumungsstation 6, wo sie mit einem PUR/PIR-Schaum bzw. einem dazu ausreagierenden Reaktionsgemisch beschäumt werden. Dazu wird eine Doppelportalanlage mit zwei Rezirkulationsmischköpfen verwendet. Die Einzelheiten hierzu sind in einer Parallelanmeldung der selben Anmelderin vom gleichen Anmeldetag mit dem Titel "Schaumauftrag mit zweidimensional verfahrbarer Auftragsvorrichtung" dargestellt, auf deren Offenbarungsgehalt hier verwiesen wird. Wesentlich ist dabei, daß die Mischköpfe jeweils zweidimensional verfahrbar sind und der Beschäumungsvorgang damit hinsichtlich der Prozeßzeit und der Flächengleichmäßigkeit optimiert abläuft. Für die Reaktion des Reaktionsgemisches ist dabei die durch den Durchlaufofen 1 erzeugte Prozeßtemperatur der Kassette wesentlich. Dabei kann natürlich auf dem Weg von dem Ofen 1 zu der Beschäumstation 6 ein gewisser Wärmeverlust eingetreten sein, der berücksichtigt werden muß.

Aus der Beschäumstation 6 fährt die Rollenfördereinrichtung 5 die vollständig beschäumten Kassetten in den Bereich einer automatischen Einklipsvorrichtung 7 mit einem Vakuumsaugwagen. Diese Einklipsvorrichtung 7 ist der Teil der Produktionsanlage, in der das erfindungsgemäße Verfahren durchgeführt wird. Sie wird im folgenden Verlauf im einzelnen dargestellt. Kurz gesagt werden in dieser Einklipsvorrichtung 7 weitere Deckschichtelemente, die in einem zweiten Durchlaufofen 8 vorgewärmt worden sind, auf die beschäumten Kassetten aufgeklipst und so mit den Kassetten zu einem geschlossenen Sandwichelement verbunden.

Der zweite Durchlaufofen 8 entspricht in seinem Aufbau dem ersten Durchlaufofen 1 und wird nicht näher erläutert. Auch die Temperatur der oberen Deckschicht ist für die weitere Reaktion des PUR/PIR-Schaums wichtig.

Das nunmehr geschlossene Sandwichelement wird von der Rollenfördereinrichtung 5 weitergefahren bis zu einer in Fig. 1 im rechten Bereich angedeuteten Doppelbandanlage 9. Diese Doppelbandanlage 9 ist konventionell aufgebaut und wird daher nicht in Einzelheiten dargestellt. Dort reagiert das PUR/PIR-Schaummaterial vollständig aus, wobei durch die Doppelbandanlage 9 der Abstand der beiden Deckschichten und damit die Stärke des fertigen Sandwichelements justiert wird. Gleichzeitig wird eine geeignete Prozeßtemperatur eingestellt.

In Fig. 2 erkennt man einige Kassetten 15, die in dem Durchlaufofen 1 gestrichelt angedeutet sind und auf der Rollenfördereinrichtung 5 eingezeichnet sind. Sie verdeutlichen noch einmal den anhand Fig. 1 bereits beschriebenen Produktionsablauf.

Die automatische Einklipsvorrichtung 7 weist fünf im Bereich der Rollenfördereinrichtung 5 angeordnete Zentriergreifer 40 auf. Diese können im Bereich der Rollenfördereinrichtung auf- und abbewegt werden, so daß sie in abgesenkter Position nicht in Eingriff mit einer Kassette 15 geraten können. Wenn eine beschäumte Kassette 15 aus der Beschäumstation 6 ausläuft, wird sie in die in Fig. 2 dargestellte Position gefahren, in der sie an ihrem stromabwärts orientierten Ende, in Fig. 2 also rechts, gegen einen stirnseitigen Zentriergreifer 40 anstößt. Dadurch ist die Position der Kassette 15 in der Transportrichtung festgelegt. Weiterhin wird die Position in der Querrichtung dazu durch die weiteren vier Zentriergreifer 40 festgelegt, die die Kassette 15 von den Längsseiten her greifen.

In Fig. 2 oberhalb dieser Position liegend, also in Transportrichtung gesehen links von der Rollenfördereinrichtung 5, weist die automatische Einklipsvorrichtung 7 einen heb- und senkbaren und in Querrichtung zu der Transportrichtung verfahrbaren Saugwagen 41 auf, der in Fig. 2 als Rahmen zu erkennen ist. Die Fahrbewegungen des Rahmens werden - den hohen Anforderungen bezüglich der Fahrgenauigkeit entsprechend - mit Hilfe von Servo-Antrieben ausgeführt. Die Konstruktion zur Bewegung dieses Rahmens in der Querrichtung und der vertikalen Richtung ist im übrigen konventionell gelöst und wird hier nicht im einzelnen erläutert.

Der Saugwagen 41 kann in der dargestellten Position obere Deckschichtelemente 35 aufnehmen, von dem eines in dem zweiten Durchlaufofen 8 eingezeichnet ist. Diese oberen Deckschichtelemente 35 werden aus dem Durchlaufofen 8 über eine Riementransporteinrichtung 42 unter die in Fig. 2 dargestellte Position des Saugwagens 41 gefahren. Dort werden sie zunächst in einer nicht dargestellten Zentriereinrichtung, die mechanisch mit den beschriebenen Zentriergreifem 40 derart verbunden ist, daß die obere Deckschicht 35 immer im exakt gleichen Abstand und lagerichtig zur zentrierten Kassette 15 zu liegen kommt, zentriert. Der Saugwagen wird daraufhin abgesenkt, saugt ein oberes Deckschichtelement 35 an und transportiert es in angehobenem Zustand über die durch die Zentriergreifer 40 gehaltene Kassette 15. Dort verklipst der Saugwagen mit einer für die Erfindung typischen Bewegungsfolge das obere Deckschichtelement 35 mit der Kassette 15. Dies wird anhand der folgenden Figuren noch näher erläutert.

Daraufhin wird der Saugwagen 41 wieder angehoben und zurückgefahren, während die Zentriergreifer 40 die zu einem Sandwichelement vervollständigte Kassette 15 freigeben, so daß diese zu der Doppelbandanlage 9 weitergefahren werden kann.

Natürlich kann der Transport der Kassette 15 in die durch die Zentriergreifer 40 definierte Position zeitgleich mit dem Transport des oberen Deckschichtelements 35 in die Position darüber erfolgen. Auch kann das Sandwichelement nach dem Einklipsvorgang weitertransportiert werden, sobald sich der Saugwagen 41 nach oben entfernt hat. Insgesamt ist man bestrebt, die stationäre Verweilzeit der Kassette 15 für den Einklipsvorgang zu minimieren. Dabei sind die Transportgeschwindigkeiten entlang der Rollenfördereinrichtung 5 und in der Doppelbandanlage 9 so ausgerichtet, daß die in der automatischen Einklipsvorrichtung 7 erforderlichen Stillstandszeiten ausgeglichen werden.

Dazu läuft eine Kassette 15 vom Beginn der Rollenfördereinrichtung 5 am Auslauf des Ofens 1 aus bis durch die Beschäumstation 6 hindurch mit einer Geschwindigkeit von z.B. 21 m/Min. Auch nach der Pause in der automatischen Einklipsvorrichtung 7 läuft das Sandwichelement mit der selben Geschwindigkeit weiter bis zur Doppelbandanlage 9. Unter Berücksichtigung der Pause in der Einklipsvorrichtung 7 ergibt sich damit ein Mittelwert, der genau auf die Transportgeschwindigkeit der Doppelbandanlage von 10,3 m/Min. abgestimmt ist. Bei diesem Verfahren ist auch die hohe Arbeitsgeschwindigkeit der in der bereits zitierten Parallelanmeldung beschriebenen Beschäumstationen 6 von Vorteil. Insgesamt ergibt sich dabei ein Takt von 12 Sekunden pro Tür bei minimierten Abständen in der Doppelbandanlage 9.

Übrigens können fehlerhafte Türelemente durch die mit 36 bezeichnete Vorrichtung quer aus der Rollenfördereinrichtung 5 ausgeschleust werden. Dadurch entsteht allerdings eine Lücke in der Doppelbandanlage 9. Hierzu greifen Transportriemen der Transporteinrichtung 36 zwischen die Rollen der Rollenfördereinrichtung 5, wobei sie auf- und abbewegbar sind. Im abgesenkten Zustand fahren die Sandwichelemente über sie hinweg in die Doppelbandanlage 9 ein. Wenn sie hochgefahren sind, können Ausschußsandwichelemente in Querrichtung von der Rollenfördereinrichtung 5 weggezogen werden.

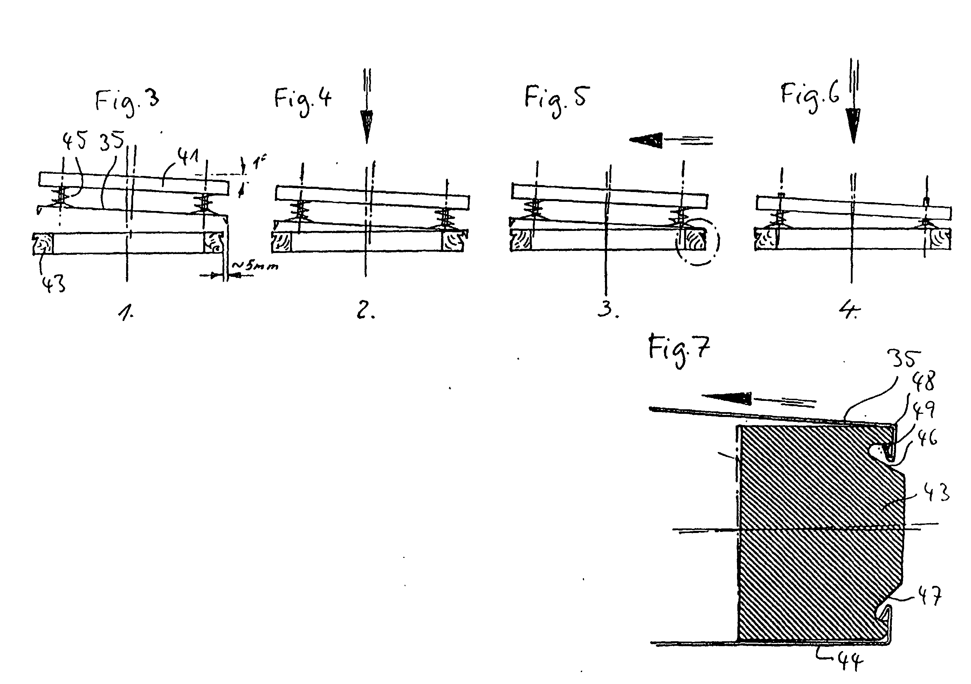

Die Fig. 3-6 verdeutlichen den Bewegungsablauf beim Verklipsen des oberen Deckschichtelements 35 mit der Kassette 15, und zwar in der Transportrichtung der Kassette 15 gesehen. Die Kassette 15 ist jedoch nur mit dem oberen Teil des Rahmens 43 dargestellt. Fig. 7 zeigt einen vollständigen Querschnitt durch den Rahmen 43, der bereits mit einer unteren Deckschicht 44 verklipst ist. In dem in Fig. 3 dargestellten Zustand fehlt jedoch noch die obere Deckschicht 35. Diese wird mit dem Saugwagen 41, der die obere Deckschicht 35 mit gefederten Saugfüßen 45 hält, abgesenkt, bis eine Seitenkante der oberen Deckschicht 35 den Rahmen 43 an dessen Oberseite berührt, wie durch den Pfeil in Fig. 4 illustriert. Dieser Zustand ist in Fig. 4 zu sehen. Dabei ist zu erkennen, daß der Saugwagen 41 die obere Deckschicht 35 etwas schräg hält, und zwar tatsächlich um etwa 1° aus der Horizontalen verkippt.

Im Vergleich zu Fig. 4 und 7 erkennt man, daß der Rahmen 43 an seiner Längsseite eine obere und eine untere hinterschnittene Ausnehmung 46 bzw. 47 aufweist. Die obere Deckschicht 35 und die untere Deckschicht 44 weisen zunächst eine der Ecke des fertigen Sandwichelements entsprechende rechtwinklige Umbiegung 48 und am Ende des dadurch gebildeten Schenkels einen klammerartig um einen Winkel von größenordnungsmäßig 120° weiter nach innen umgebogenen Abschnitt 49 auf. In Fig. 7 erkennt man, wie sich dieser klammerartige Abschnitt 49 in der hinterschnittenen Ausnehmung 46 verhakt, wenn die Deckschichten 35 und 44 mit dem Rahmen 43 verklipst sind. In Fig. 4 ist jedoch im rechten unteren Bereich erkennbar, daß der Klammerabschnitt 49 noch außerhalb der Ausnehmung 46 liegt, weil die obere Deckschicht 35 gegenüber der in Fig. 7 dargestellten Position etwas zu weit rechts liegt.

Dem Übergang von Fig. 4 auf Fig. 5 entsprechend findet dann eine im wesentlichen horizontale Bewegung statt, die durch den Pfeil in Fig. 5 symbolisiert ist. Dadurch wird der Klammerabschnitt 49 in die Ausnehmung 46 am rechten oberen Rand des Rahmens eingerückt. Damit ist die in Fig. 7 dargestellte Situation hergestellt, wobei jedoch die gegenüberliegende Seite der oberen Deckschicht 35 noch von dem Rahmen 41 abgehoben ist, weil die obere Deckschicht 35 insgesamt geringfügig schräggestellt ist. Dabei können sich, wie erwähnt, typischerweise Winkel von etwa 1 ° ergeben. Nun kann bei der in Fig. 5 dargestellten Horizontalbewegung des Saugwagens 41 die obere Deckschicht 35 etwas weiterbewegt werden, als einer dem endgültigen Montagezustand des Sandwichelements entsprechenden Anlage des durch die Umbiegung 48 gebildeten Schenkels an die Stirnfläche entspricht. Dadurch wird dieser Schenkel etwas verbogen, d.h. der Winkel der Umbiegung 48 etwas geweitet, gleichzeitig kann auch der Rahmen 43 etwas nachgeben, wobei die Elastizität der unteren Deckschicht 44 unterstützt. Die durch dieses Nachgeben verursachte Kippbewegung des Rahmens 43 ist in Fig. 7 angedeutet. Dadurch ergibt sich der große Vorteil, daß bei der nun folgenden und in Fig. 6 dargestellten Andrückbewegung, die die entgegengesetzte Seite der oberen Deckschicht 35 mit dem dort gelegenen klammerartigen Vorsprung in die dortige Ausnehmung des Rahmens 43 einrasten läßt, geringere Kräfte zwischen dem Holzrahmen 43 und diesem klammerartigen Abschnitt auftreten. Damit kann die Einklipsbewegung relativ "weich" durchgeführt werden, ohne die empfindliche hinterschnittene Holzstruktur des Holzrahmens 43 zu gefährden.

Insgesamt kann dadurch durch Aufteilung des Einklipsvorgangs in zwei aufeinanderfolgende Einrastschritte, durch das im wesentlichen horizontal erfolgende Einrasten (in den Figuren rechts) und durch die Kraftentlastung des Einrastens auf der linken Seite durch ein leichtes Überbiegen der Verbindung auf der rechten Seite eine sehr schonende und präzise Rastverbindung auch bei empfindlichen Holzrahmenstrukturen gewährleistet werden.

Die Figuren 3 - 6 zeigen dabei, daß bei dem hier dargestellten Ausführungsbeispiel keine Kippbewegung des Saugwagens 41 notwendig ist. Vielmehr sind die Saugfüße 45 des Saugwagens 41 federnd gelagert, so daß sie im ausgefahrenen Zustand die obere Deckschicht 35 in der gleichen Schräglage halten, die dem Saugwagen 41 zu eigen ist. In dem in Fig. 6 dargestellten angedrückten Zustand wird der weiter unten liegende Saugfuß 45 etwas stärker federnd zurückgefahren, so daß die obere Deckschicht 35 dadurch gerade auf dem Rahmen 43 zu liegen kommt. Der Saugwagen 41 weist also eine dauernde Schrägstellung auf.

Gleiches gilt übrigens für die Aufnahme der oberen Deckschichten 35 vor dem Transport zu den Kassetten 15. Auch dort hilft die federnde Lagerung der Saugfüße 45 dabei, die geradeliegende obere Deckschicht 35 mit dem etwas schräg montierten Saugwagen 41 mit allen Saugfüßen aufzunehmen.

Nach der in Fig. 6 dargestellten Situation kann das Vakuum der Saugfüße 45 abgeschaltet werden, so daß der Saugwagen 41 nach oben weggehoben werden kann und das Sandwichelement dabei liegen bleibt. Es versteht sich, daß der Saugwagen 41 nicht nur, wie in der prinzipiellen Querschnittsdarstellung der Fig. 3 - 6 gezeigt, zwei Saugfüße 45, sondern zumindest 4 (im vorliegenden Fall 16) aufweist.

## Patentansprüche

1. Verfahren zum Herstellen eines Sandwichelements aus einer unteren und einer oberen Deckschicht (44, 35), einem die Deckschichten in einem Außenrandbereich verbindenden Rahmen (43) und einem Füllmaterial zwischen den Deckschichten (35, 44) und innerhalb des Rahmens (43),
bei dem durch eine automatische Einklipsvorrichtung (7, 41) Rasteinrichtungen (46, 48, 49) zumindest einer der Deckschichten (35) und des Rahmens (43) an zumindest zwei entgegengesetzten Außenkanten des Sandwichelements maschinell in Eingriff gebracht werden, so daß der Rahmen (43) und die Deckschicht (35) verbunden sind,
**dadurch gekennzeichnet, daß** die automatische Einklipsvorrichtung (7, 41) unter relativer Schräglage der Deckschicht (35) und des Rahmens (43) zunächst die Rasteinrichtung (46, 48, 49) auf einer der beiden Seiten in Eingriff bringt und danach unter Aufrechterhaltung dieses Eingriffs die Schräglage in eine Anlage überführt, wobei bei Herstellung der Anlage die Rasteinrichtung auf der anderen der beiden Seiten in Eingriff gebracht wird.

2. Verfahren nach Anspruch 1, bei dem eine oben offene Kassette (15) aus einer der Deckschichten (44) und dem Rahmen (43) hergestellt wird, das Füllmaterial in die Kassette (15) eingebracht wird und die Kassette (15) danach mit der oberen Deckschicht (35) durch in Eingriff Bringen der Rasteinrichtungen (46, 48, 49) verbunden wird.

3. Verfahren nach Anspruch 1 oder 2, bei dem die mit der oberen Deckschicht (35) verbundene Kassette (15) in eine Doppelbandanlage (9) eingefahren wird.

4. Verfahren nach einem der vorstehenden Ansprüche, bei dem das Füllmaterial ein Schaummaterial oder eine Vorläuferflüssigkeit dazu ist.

5. Verfahren nach einem der vorstehenden Ansprüche, bei dem die Schräglage einem Winkel zwischen 0,5° und 4°, vorzugsweise zwischen 0,8° und 2°, entspricht.

6. Verfahren nach einem der vorstehenden Ansprüche, bei dem die Rasteinrichtung (46, 48, 49) Hinterschnitte (46) an seitlichen Rahmenaußenkanten und stirnseitlich, nach innen gebogene Vorsprünge (49) an der Deckschicht (35) aufweisen.

7. Verfahren nach einem der vorstehenden Ansprüche, bei dem der Rahmen (43) im wesentlichen aus Holz oder einem Holzmaterial besteht.

8. Verfahren nach einem der vorstehenden Ansprüche, bei dem die zuerst in Eingriff gebrachte Rasteinrichtung (46, 48, 49) elastisch ausgelenkt wird, um das in Eingriff Bringen der Rasteinrichtung (46, 48, 49) zu erleichtem

9. Verfahren nach einem der vorstehenden Ansprüche, bei dem das Sandwichelement ein Türelement ist

10. Verfahren nach einem der vorstehenden Ansprüche, bei dem das Verbinden des Rahmens (43) und der Deckschicht (35) vonstatten geht, während eines der beiden Teile in einer Fördereinrichtung (5) angehalten wird.

11. Verfahren nach Anspruch 10, bei dem das angehaltene Teil die Kassette (15) ist, das mit der Kassette (15) zu verklipsende Teil die obere Deckschicht (35) ist und der Vorgang des Füllmaterialeintrags in die Kassette (15) bei gegenüber einer Anlagenfördergeschwindigkeit erhöhter Geschwindigkeit erfolgt, wobei sich mit dem Anhalten in einem Gesamtmittelwert die Anlagenfördergeschwindigkeit ergibt.

12. Verfahren nach Anspruch 10 oder 11, bei dem das angehaltene Teil die Kassette (15) ist, das mit der Kassette (15) zu verklipsende Teil die obere Deckschicht (35) ist und das Fördern der mit der oberen Deckschicht (35) verbundenen Kassette (15) von der automatischen Einklipsvorrichtung (7, 41) zu der Doppelbandanlage (9) mit gegenüber einer Anlagenfördergeschwindigkeit erhöhter Geschwindigkeit erfolgt, wobei sich mit dem Anhalten in einem Gesamtmittelwert die Anlagenfördergeschwindigkeit ergibt.

13. Verfahren nach einem der Ansprüche 1 - 9, bei dem das Verbinden der Kassette mit der oberen Deckschicht während eines ununterbrochenen Transports der Kassette auf einer Fördereinrichtung erfolgt, indem die Kassette gegen die relativ dazu schrägliegende obere Deckschicht gefahren wird, dabei der Eingriff einer der Rastereinrichtungen hergestellt wird, die obere Deckschicht durch die Mitnahme im Transport unter Aufrechterhaltung dieses Eingriffs unter einer Andruckvorrichtung hindurchgezogen wird, wodurch die obere Deckschicht in einer Anlage gegen die Kassette überführt und die Rasteinrichtung auf der anderen Seite in Eingriff gebracht wird.

14. Verfahren nach einem der vorstehenden Ansprüche, bei dem die Kassetten (15) vor dem Aufbringen des Schaummaterials oder der Vorläuferflüssigkeit in einem Durchlaufofen (1) mit Hilfe einer Fördereinrichtung (3, 4) über eine Ofenstrecke gefördert und erwärmt werden, so daß die Kassetten (15) am Ende der Förderstrecke eine Prozeßtemperatur erreichen, wobei der Durchlaufofen (1) in eine Mehrzahl von den Kassetten (15) durchfahrene Ofenzonen aufgeteilt ist und bei einer vorübergehenden Betriebsunterbrechung und damit verbundenem Stillstand der Fördereinrichtung (3, 4) jede Ofenzone mit in solcher Weise individuell verringerter Temperatur betrieben wird, daß in der Ofenzone befindliche Kassetten (15) im wesentlichen eine Zonenpausentemperatur beibehalten, die im wesentlichen der Temperatur einer Kassette (15) in der jeweiligen Ofenzone im Normalbetrieb entspricht, so daß nach Wiederaufnahme des Normalbetriebs keine wesentliche Überhitzung der Kassetten (15) über die vorgegebene Prozeßtemperatur vorliegt.

15. Verfahren nach einem der vorstehenden Ansprüche, bei dem die Auftragsvorrichtung (6) bei der Beschichtung mit dem Schaummaterial oder der Vorläuferflüssigkeit eine Austrittsöffnung zweidimensional bewegt, wobei eine Richtung einer Förderrichtung der Kassette (15) und die andere Richtung einer Querrichtung dazu entspricht.

16. Verfahren nach einem der vorstehenden Ansprüche, bei dem die Kassette (15) vor dem Aufbringen des Schaummaterials oder der Vorläuferflüssigkeit vereinzelt ist.

17. Produktionsanlage zum Herstellen eines Sandwichelements aus einer unteren und einer oberen Deckschicht (44, 35), einem die Deckschichten in einem Außenrandbereich verbindenden Rahmen (43) und einem Füllmaterial zwischen den Deckschichten (35, 44) und innerhalb des Rahmens (43) und mit
einer automatischen Einklipsvorrichtung (7, 41), die dazu ausgelegt ist, Rasteinrichtungen (46, 48, 49) zumindest einer der Deckschichten (35) und des Rahmens (43) an zumindest zwei entgegengesetzten Außenkanten des Sandwichelements maschinell in Eingriff zu bringen, so dass der Rahmen (43) und die Deckschicht (35) verbunden sind,
**dadurch gekennzeichnet, dass** die automatische Einklipsvorrichtung (7, 41) dazu ausgelegt ist, unter relativer Schräglage der Deckschicht (35) und des Rahmens (43) zunächst die Rasteinrichtung (46, 48, 49) auf einer der beiden Seiten in Eingriff zu bringen und danach unter Aufrechterhaltung dieses Eingriffs die Schräglage in eine Anlage zu überführen, wobei bei Herstellung der Anlage die Rasteinrichtung auf der anderen der beiden Seiten in Eingriff gebracht wird.

18. Produktionsanlage nach Anspruch 17, ausgelegt zur Durchführung des Verfahrens nach einem der Ansprüche 2 - 16.

## Claims

1. A method of producing a sandwich element from a lower and an upper cover layer (44, 35), a frame (43) connecting said cover layers in a peripheral region and a filling material between said cover layers (35, 44) and inside said frame (43),
wherein latch means (46, 48, 49) of at least one of said cover layers (35) and said frame (43) are engaged in a automatic manner at at least two opposed outer edges of the sandwich element by an automatic clipping device (7, 41) so that said frame (43) and said cover layers (35) are connected,
**characterized in that** said automatic clipping device (7, 41) engages primarily said latch means (46, 48, 49) at one of both sides, said cover layer (35) and said frame (43) being mutually inclined therein, and thereafter transforms said inclination into an abutment while maintaining said engagement, wherein in achieving said abutment said latch means on the other of both sides is engaged.

2. A method according to claim 1, in which a cassette (15) open at its top is produced from one of said cover layers (44) and said frame (43), said filling material is introduced into said cassette (15), and said cassette (15) is connected with said upper cover layer (35) by engaging said latch means (46, 48, 49).

3. A method according to claim 1 or 2, in which the cassette (15) connected with said upper cover layer (35) is conveyed into a double band press (9).

4. A method according to one of the preceding claims, in which said filling material is a foam material or a precursor liquid therefor.

5. A method according to one of the preceding claims, in which said inclination corresponds to an angle between 0.5° and 4°, preferable between 0.8° and 2°.

6. A method according to one of the preceding claims, in which said latch means (46, 48, 49) comprises under-cuts (46) at lateral outer frame edges and projections (49) bent inwardly at said cover layer (35) at the faces.

7. A method according to one of the preceding claims, in which said frame (43) essentially consists of wood or a wood-based material.

8. A method according to one of the preceding claims, in which the latch means (46, 48, 49) primarily engaged is displaced elastically in order to facilitate said engagement of said latch means (46, 48, 49).

9. A method according to one of the preceding claims, in which said sandwich element is a door element.

10. A method according to one of the preceding claims, in which said connecting of said frame (43) and said cover layers (35) proceeds during stopping of one of both parts in a conveyor (5).

11. A method according to claim 10, in which said stopped part is said cassette (15), the part to be clip-connected with said cassette (15) is said upper cover layer (35), and said process of introducing said filling material into said cassette (15) proceeds with an increased speed compared to an installation conveying speed, wherein together with said stopping said installation conveying speed results as an overall average.

12. A method according 10 or 11, in which said stopped part is said cassette (15), the part to be clip-connected with said cassette (15) is said upper cover layer (35), and said conveying of said cassette (15) connected with said upper cover layer (15) from said automatic clipping device (7, 41) to said double band press (9) proceeds with increased speed compared to an installation conveying speed, wherein together with said stopping said installation conveying speed results as an overall average.

13. A method according to one of claims 1 to 9, wherein said connecting of said cassette with said upper cover layer proceeds during an uninterrupted transport of said cassette on a conveyor by conveying said cassette against said upper cover layer being inclined relative thereto, therein engaging one of said latch means, said upper layer being drawn under and passing a pressing device by said conveying and in maintaining said engagement, whereby said upper cover layer abuts against said cassette and said latch means on the other side is engaged.

14. A method according to one of the preceding claims, in which said cassettes (15) are conveyed and heated in a continuous furnace (1) along a furnace distance by means of a conveyor (3, 4) before said introducing of said foam material or precursor liquid so that said cassettes (15) have reached a process temperature at the end of said conveyor distance, wherein said continuous furnace (1) is divided into a plurality of furnace zones passed by said cassettes (15) and wherein each furnace zone, during a temporary interruption of operation and resulting stopping of said conveyor (3, 4), is operated with a temperature individually reduced in such manner that cassettes (15) in said furnace zone maintain essentially a zone interruption temperature essentially corresponding to the temperature of a cassette (15) in the respective furnace zone during normal operation so that after resume of normal operation there is no substantial overheating of said cassettes (15) over said given process temperature.

15. A method according to one of the preceding claims, in which said application device (6) two-dimensionally moves a discharge orifice during coating with said foam material or precursor liquid, wherein one direction corresponds to a conveying direction of said cassette (15) and the other direction corresponds to a transversal direction thereto.

16. A method according to one of the preceding claims, in which said cassette (15) is decollated before said application of said foam material or said precursor liquid.

17. A production installation for producing a sandwich element from a lower and an upper cover layer (44, 35), a frame (43) connecting said cover layers in a peripheral region and a filling material between said cover layers (35, 44) and inside said frame (43), and comprising an automatic clipping device (7, 41) being adapted to automatically engage latch means (46, 48, 49) of at least one of said cover layers (35) and said frame (43) at at least two opposed outer edges of the sandwich element so that said frame (43) and said cover layers (35) are connected,
**characterized in that** said automatic clipping device (7, 41) is adapted to engage primarily said latch means (46, 48, 49) at one of both sides, said cover layer (35) and said frame (43) being mutually inclined therein, and thereafter transforms said inclination into an abutment while maintaining said engagement, wherein in achieving said abutment said latch means on the other of both sides is engaged.

18. A production installation according to claim 17 being adapted for carrying-out said method according to one of claims 2 to 16.

## Revendications

1. Procédé de fabrication d'un panneau sandwich constitué de plaques de parement inférieure et supérieure (44, 35), d'un cadre (43) reliant les plaques de parement sur leur périmètre, et d'un matériau de remplissage entre les plaques de parement (35, 44) et à l'intérieur du cadre (43),
au cours duquel, à l'aide d'une installation automatique d'encliquetage (7, 41), des dispositifs d'encliquetage (46, 48, 49) d'au moins une des plaques (35) et du cadre (43) sont mis en place automatiquement sur au moins deux bordures opposées du panneau sandwich, de manière à fixer la plaque de parement (35) sur le cadre (43),
et **caractérisé par le fait que** l'installation automatique d'encliquetage (7, 41) met tout d'abord en prise le dispositif d'encliquetage (46, 48, 49) sur l'un des deux cotés, la plaque de parement (35) et le cadre (43) présentant un angle relatif, puis, en maintenant cette prise, les fait changer de position, et lors de cette opération, met en prise le dispositif d'encliquetage sur l'autre coté.

2. Procédé suivant la revendication 1, au cours duquel un caisson (15) ouvert sur sa partie supérieure, est constitué à partir d'une des plaques de parement (44) et du cadre (43), le matériau de remplissage est versé dans le caisson (15) et la plaque de parement supérieure (35) est fixée sur le caisson (15) en mettant en prise les dispositifs d'encliquetage (46, 48, 49).

3. Procédé suivant les revendications 1 ou 2, au cours duquel le caisson (15) fermé par la plaque de parement supérieure (35) est entraîné vers un convoyeur à double bande (9)

4. Procédé suivant l'une des revendications précédentes, au cours duquel le matériau de remplissage est une mousse expansée ou une préparation liquide pour mousse expansée.

5. Procédé suivant l'une des revendications précédentes, pour lequel l'angle d'inclinaison est compris entre 0,5° et 4°, si possible entre 0,8° et 2°.

6. Procédé suivant l'une des revendications précédentes, pour lequel les dispositifs d'encliquetage (46, 48, 49) présentent une contre-dépouille (46) sur les bordures latérales extérieures du cadre, et des nez (49) coudés vers l'intérieur sur la bordure frontale de la plaque de parement (35).

7. Procédé suivant l'une des revendications précédentes, pour lequel le cadre (43) est constitué essentiellement de bois ou d'un matériau à base de bois.

8. Procédé suivant l'une des revendications précédentes, pour lequel le premier dispositif d'encliquetage (46, 48, 49) qui est mis en prise est articulé élastiquement, pour faciliter la mise en prise du dispositif d'encliquetage (46, 48, 49).

9. Procédé suivant l'une des revendications précédentes, pour lequel le panneau sandwich est un élément de porte.

10. Procédé suivant l'une des revendications précédentes, pour lequel la fixation de la plaque de parement (35) sur le cadre (43) est effectuée pendant que l'une des deux pièces est stoppée sur un convoyeur (5).

11. Procédé suivant la revendication 10, pour lequel l'élément stoppé est le caisson (15), l'élément à clipper sur le caisson est la plaque de parement supérieure (35) et le processus d'introduction du matériau de remplissage dans le caisson (15) s'effectue à une vitesse supérieure à celle de la installation, de manière qu'en prenant en compte l'arrêt, on obtienne la vitesse moyenne de la installation.

12. Procédé suivant la revendication 10 ou 11, pour lequel l'élément stoppé est le caisson (15), l'élément à clipper sur le caisson est la plaque de parement supérieure (35) et le transport du caisson (15) sur lequel est fixée la plaque de parement supérieure (35) depuis l'installation d'encliquetage automatique (7, 41) vers le convoyeur à double bande (9) s'effectue à une vitesse supérieure à celle de la installation, de manière qu'en prenant en compte l'arrêt, on obtienne la vitesse moyenne de la installation.

13. Procédé suivant l'une des revendications 1-9, pour lequel la fixation de la plaque de parement supérieure sur le caisson est effectuée lors d'un transport ininterrompu du caisson sur un convoyeur, au supérieure est entraînée par le transport, la mise en prise étant maintenue, puis dirigée sous un dispositif de pression, la plaque de parement supérieure étant mise en position contre le caisson et le dispositif d'encliquetage mis en prise sur la bordure opposée.

14. Procédé suivant l'une des revendications précédentes, pour lequel les caissons (15) avant l'introduction de la mousse ou de la préparation liquide pour mousse expansée, sont transportés et réchauffés dans un four continu (1) sur une certaine distance à l'aide d'un convoyeur (3, 4), de manière à ce que les caissons (15) atteignent à la fin de la distance de transport une température de process, le four continu (1) étant réparti sur plusieurs zones traversées par les caissons (15), et lorsque survient une interruption temporaire de production, associée à un arrêt du convoyeur (3, 4), chaque zone est portée séparément à une température inférieure, de manière à ce que les caissons (15) sur trouvant dans la zone de four se maintiennent à une température de pause dans la zone, correspondant globalement à la température d'un caisson (15) dans la zone correspondante en exploitation normale, de manière qu'après reprise de l'activité normale, il n'existe pas de surchauffe significative des caissons (15) par rapport à la température de consigne du process.

15. Procédé suivant l'une des revendications précédentes, pour lequel l'installation de remplissage (6), lors de l'application de la mousse ou de la préparation liquide pour mousse expansée, déplace une buse dans deux directions, l'une étant la direction de transport du caisson (15) et l'autre la direction perpendiculaire.

16. Procédé suivant l'une des revendications précédentes, pour lequel le caisson (15) est isolé avant le remplissage de la mousse ou de la préparation liquide pour mousse expansée.

17. Installation de production pour la fabrication d'un panneau sandwich constitué d'une plaque de parement supérieure et d'une plaque de parement inférieure (44, 35), d'un cadre reliant les plaques de parement sur leur périmètre (43) et d'un matériau de remplissage entre les deux plaques de parement (35, 44) et à l'intérieur du cadre (43) et équipé
d'une installation d'encliquetage (7, 41), conçue pour mettre en prise automatiquement des dispositifs d'encliquetage (46, 48, 49) d'au moins une des plaques de parement (35) et du cadre (43) sur au moins deux bordures opposées du panneau sandwich, pour fixer la plaque de parement (35) sur le cadre (43),
et **caractérisé par le fait que** l'installation automatique d'encliquetage (7, 41) met tout d'abord en prise le dispositif d'encliquetage (46, 48, 49) sur l'un des deux cotés, la plaque de parement (35) et le cadre (43) présentant un angle relatif, puis, en maintenant cette prise, les fait changer de position, et lors de cette opération, met en prise le dispositif d'encliquetage sur l'autre coté.

18. Installation de production suivant la revendication 17, conçue pour l'exécution du procédé suivant l'une des revendications 2 - 16.
